# FASCICULE DE BREVET EUROPEEN

(11) **EP 2 336 014 B1**
(45) Date de publication et mention de la délivrance du brevet: **19.04.2017**
(21) Numéro de dépôt: 10405226.1
(22) Date de dépôt: 24.11.2010
(51) Int. Cl.: B62K 13/08, B62K 15/00

(54) **Véhicule transformable permettant de passer d'un mode de roulage à empattement long à celui d'un empattement court en une seule opération rapide**
Verstellbares Fahrzeug, bei dem es möglich ist, mit einer einzigen Schnellschaltbewegung von einem Wagenumlaufmodus mit langem Achsabstand auf einen mit kurzem Achsabstand umzuschalten
Convertible vehicle suitable for changing from a driving mode with a long wheelbase to one with a short wheelbase in a single quick operation

(30) Priorité: 28.11.2009 CH 18262009
(43) Date de publication de la demande: 22.06.2011
(73) Titulaire: Collombin, Eric, 1223 Cologny (CH)
(72) Inventeur: Collombin, Eric, 1223 Cologny (CH); Collombin, Andre-Marcel, 1290 Versoix (CH)
(74) Mandataire: Bugnion Genève

(56) Documents cités:
- WO-A1-2005/047093
- CN-Y- 201 161 667

## Description

Dans les zones urbaines notamment, on utilise de nombreux véhicules individuels tels que scooters, vélomoteurs, bicyclettes, etc. mais tous posent de sérieux problèmes de parcage en fin d'utilisation dus au manque de place et au vandalisme. Il existe déjà une multitude d'engins pliables tels que bicyclettes, trottinettes (électriques ou non) mais qui, pour être pliés nécessitent des opérations multiples, compliquées et parfois présentant des risques de pincements ou blessures. De plus, une fois pliés, ces engins doivent être soulevés pour être transportés. Afin d'offrir une stabilité nécessaire à sa sécurité dans le flot de circulation, un véhicule doit généralement disposer d'un empattement relativement important qui devient un handicap en fin d'utilisation lorsqu'il s'agit de le parquer.

Le document CN 201161667Y décrit une bicyclette pliable du type mentionné ci-dessus. Le pliage s'effectue en décrochant une barre porte-pédalier du support de colonne de direction, en appliquant cette barre porte-pédalier contre le support de selle et en l'y fixant, puis en tournant le support de siège, lequel est engagé dans un manchon, pour faire pivoter la roue arrière de façon à ce qu'elle vienne en position parallèle et coaxiale avec la roue avant. Cette bicyclette une fois pliée est instable, l'empattement étant nul après pliage, elle peut toutefois être poussée ou tirée en position inclinée.

La présente invention a pour but de remédier à ces inconvénients.
Dans ce but la présente invention propose un véhicule permettant de passer d'un mode de roulage à empattement long à celui d'un empattement court en une seule opération rapide.

À cet effet la présente invention a pour objet un véhicule transformable présentant les caractéristiques de la revendication 1, à savoir un véhicule constitué d'au moins un corps principal relié à un corps secondaire portant la colonne de direction par l'intermédiaire d'un bras coudé articulé et d'un bras rectiligne articulé, d'un support de siège basculant relié au bras coudé à travers une bielle, d'une roue avant montée en rotation à ladite colonne de direction et d'une roue arrière montée en rotation au dit corps principal, le pliage de l'articulation formée par le dit corps principal, le dit corps secondaire, ledit bras coudé et le dit bras rectiligne opérant le passage d'une conformation à empattement maximum dudit véhicule à une conformation à empattement minimum.

En effet, en opérant un rapprochement des roues avant et arrière on obtient un encombrement au sol réduit tout en conservant une possibilité de roulage. Ce résultat est obtenu en scindant le véhicule en 4 éléments principaux:
- Un corps principal
- Un support de colonne de direction
- Un support de siège
- Un trapèze articulé

Des modes d'exécution préférés de la présente invention sont définis par les revendications dépendantes.

D'autres caractéristiques et avantages de la présente invention apparaîtront à l'homme du métier grâce à la description ci-dessous de modes de réalisation de l'invention illustrés par les dessins ci annexés :

### Liste des dessins

*Figure 1**:* Représente une vue latérale du véhicule en position dépliée, empattement maximum.

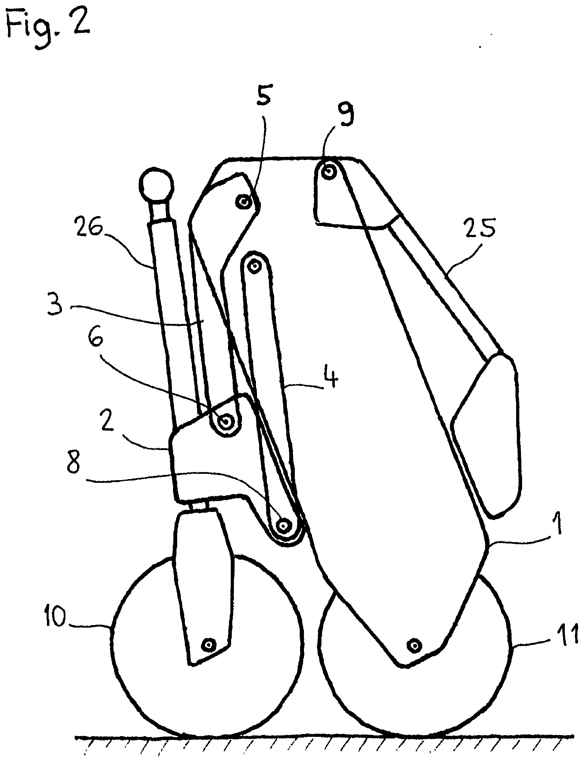

*Figure 2**:* Représente une vue latérale du véhicule en position pliée, empattement minimum.

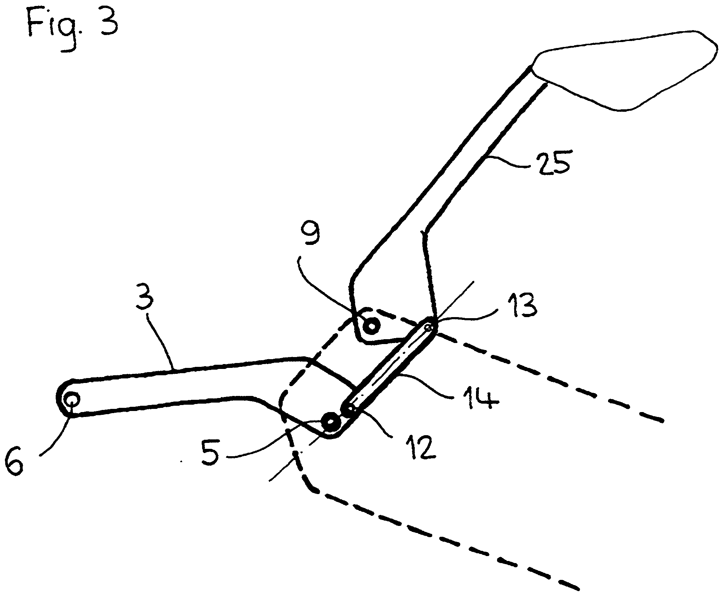

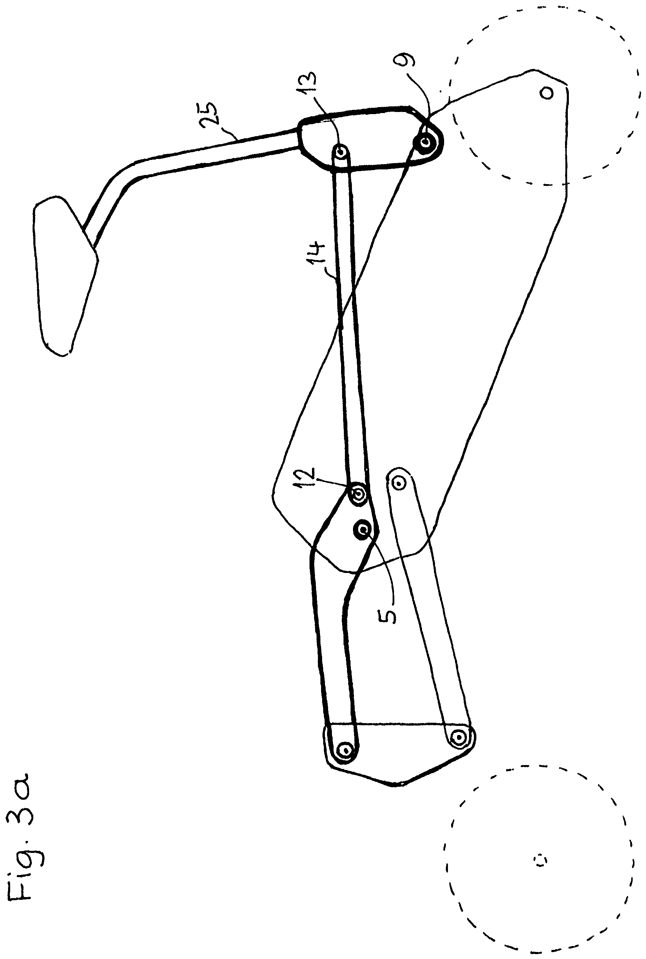

*Figure 3**:* Représente un mode d'actionnement du support de siège en position dépliée.
*Figure 3a**:* Représente une variante de mode d'actionnement du support de siège en position dépliée.

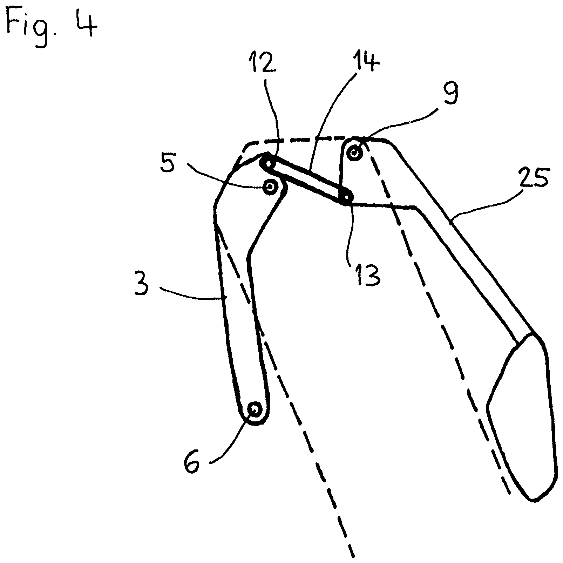

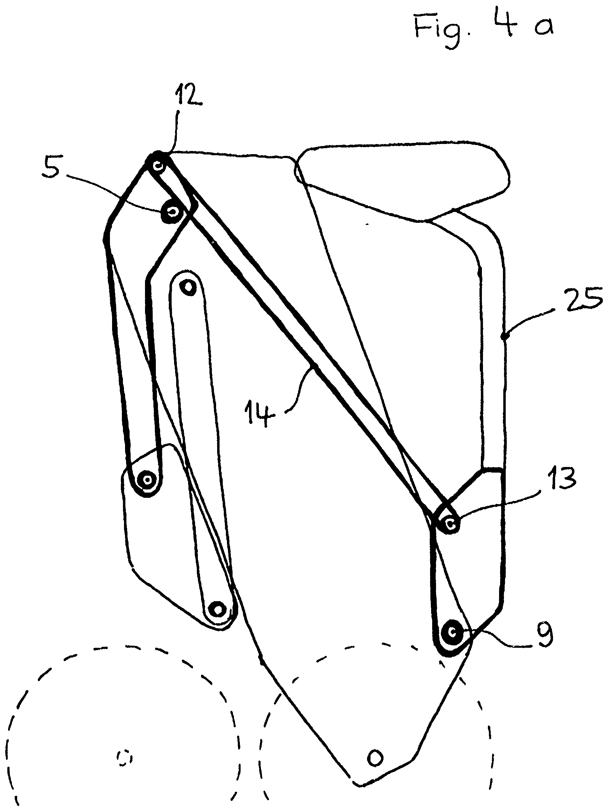

*Figure 4**:* Représente un mode d'actionnement du support de siège en position pliée.
*Figure 4a**:* Représente une variante de mode d'actionnement du support de siège en position pliée.

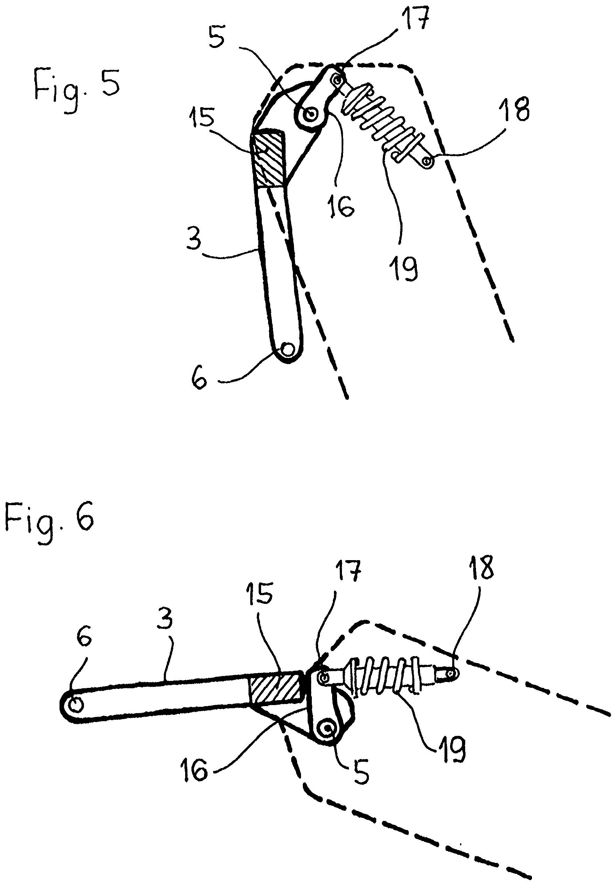

*Figure 5**:* Représente le système de butée amortie correspondant à la position dépliée du véhicule.
*Figure 6**:* Représente le système de butée amortie correspondant à la position pliée du véhicule.

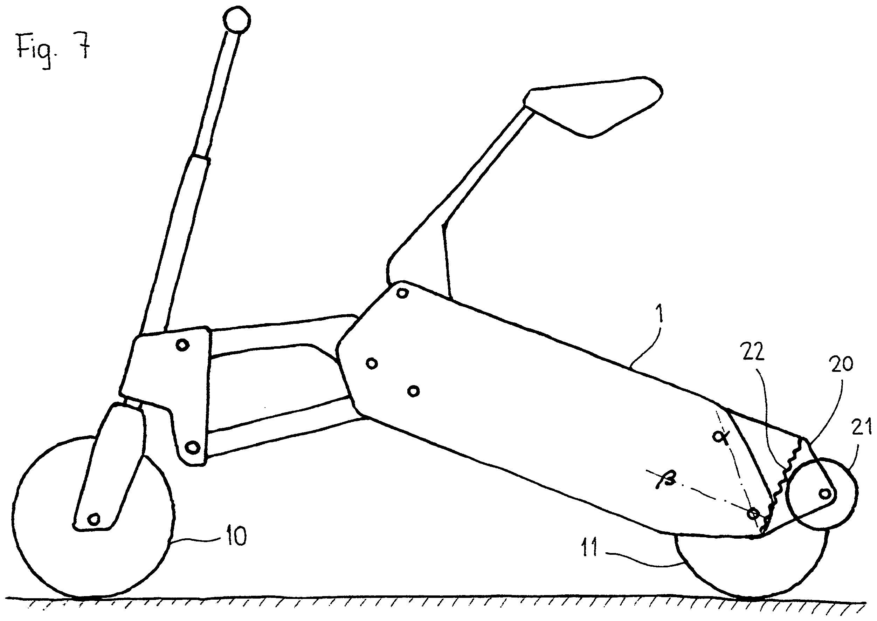

*Figure 7**:* Représente une vue latérale du véhicule avec les roulettes latérales décollées du sol.

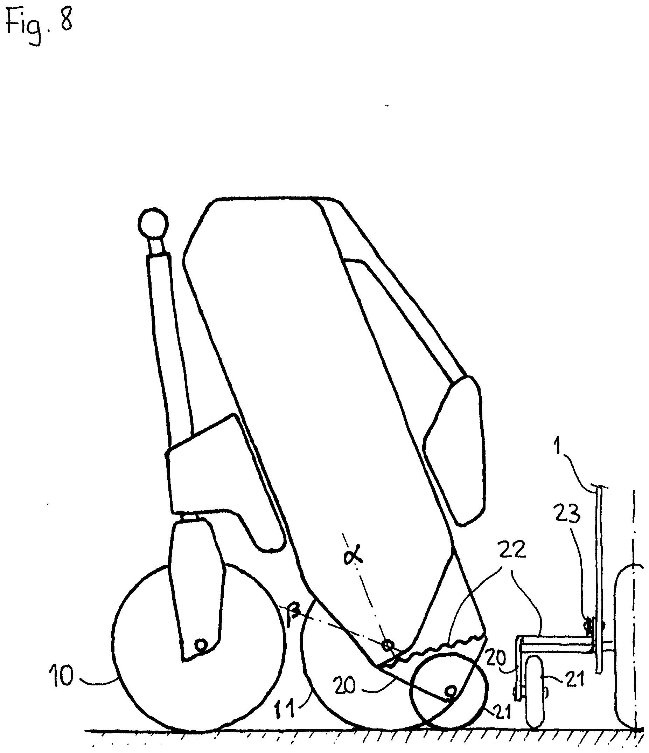

*Figure 8**:* Représente une vue latérale du véhicule avec les roulettes latérales en contact avec le sol.

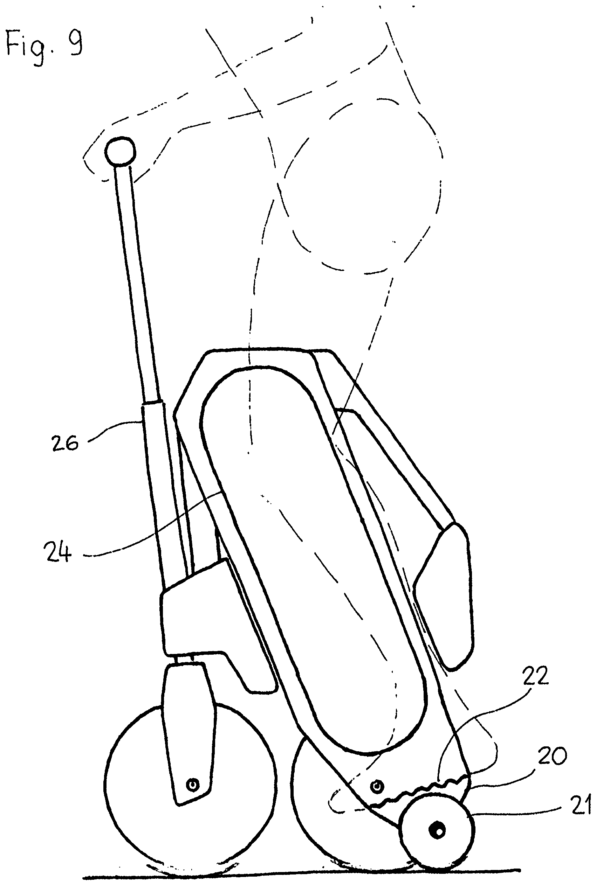

*Figure 9**:* Représente la manière de chevaucher en position debout.

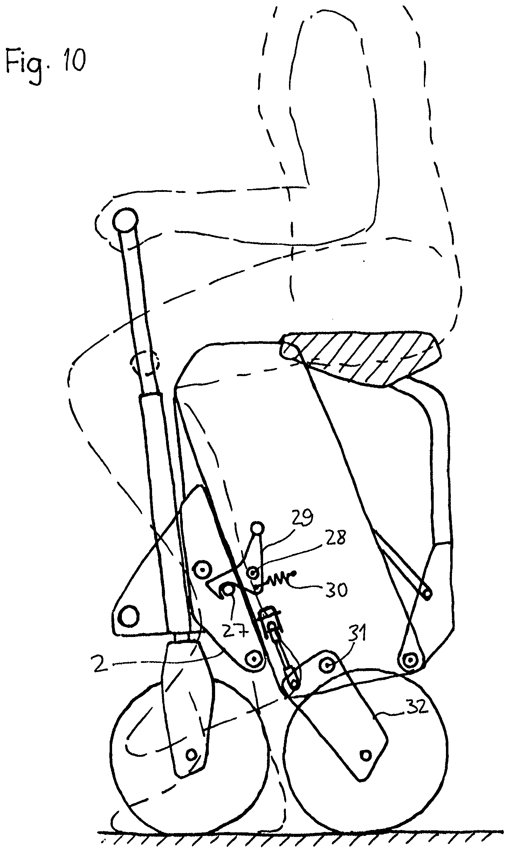

*Figure 10**:* Représente un dispositif de verrouillage dans la position pliée du véhicule ainsi que le mode d'usage siège.

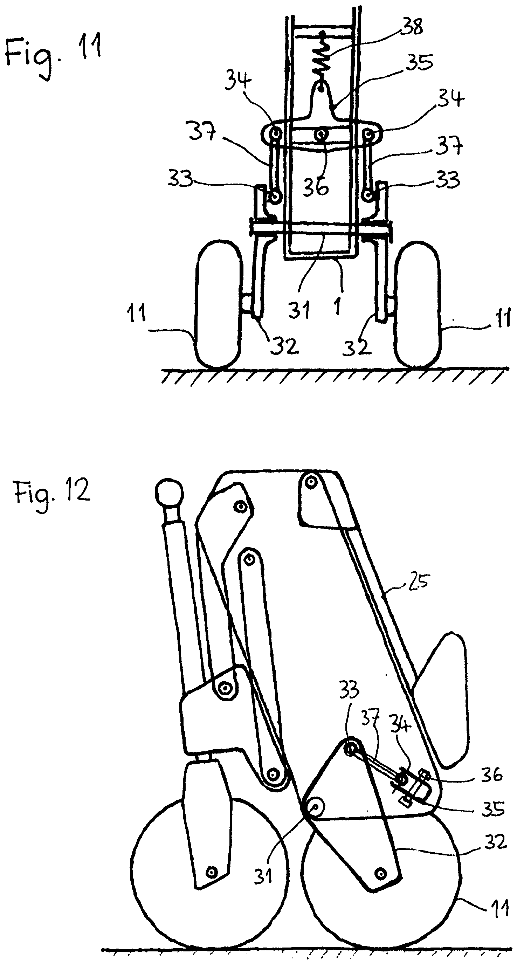

*Figure 11**:* Représente une vue arrière du système de basculement avec rappel de la position verticale.
*Figure 12**:* Représente une vue latérale du système de basculement.

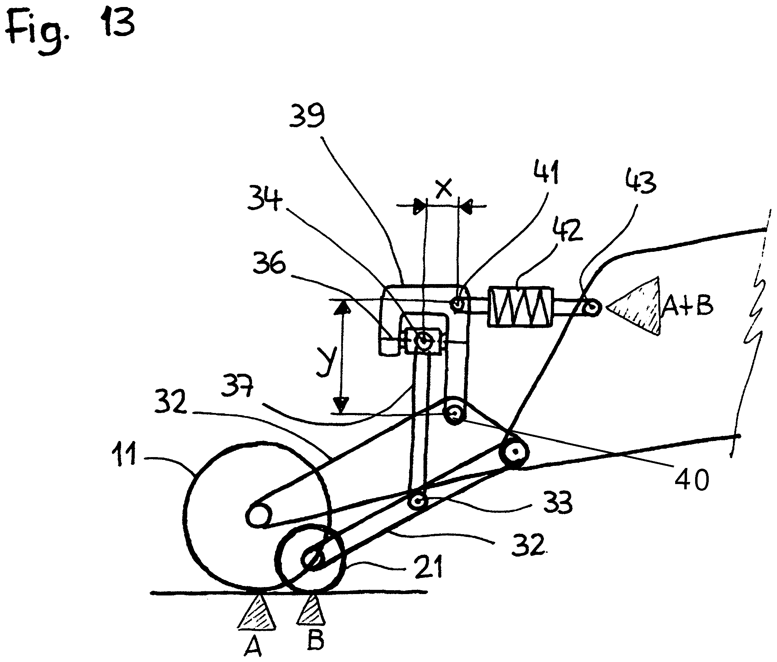

*Figure 13**:* Représente une vue latérale du système de répartition de charge au sol de chacune des roues.

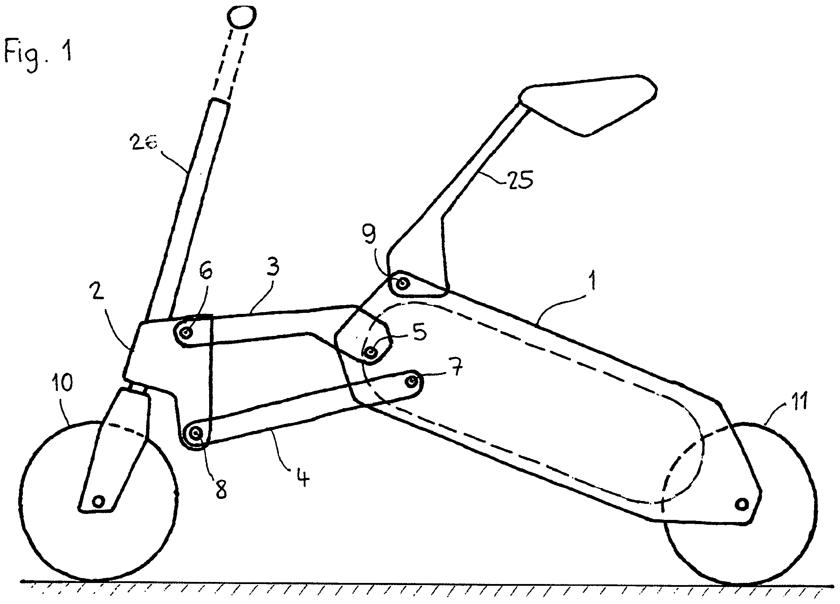

A titre d'exemple non-exclusif nous présentons une forme d'exécution de l'invention correspondant à un vélo à pédalage assisté (Voir figure 1): Le corps principal (1) intègre entre autres le système de traction, pédalier, moteur, boîte à vitesses, etc. Il est relié au support de colonne de direction (2) par l'intermédiaire d'un bras coudé (3) articulé sur des pivots (5 et 6) ainsi qu'un bras (4) articulé sur des pivots (7, 8). L'emplacement des pivots (5,6,7,8) ainsi que la longueur des bras (3, 4) sont déterminés afin que, lors du pliage, les deux bras et la colonne de direction (26) se positionne de manière quasi parallèle. Le support de siège (25) s'articule sur le pivot (9) aménagé sur le corps principal (1) et est relié au bras (3) par l'intermédiaire de la bielle (14) fixée sur les pivots (12, 13) ce qui permet de rabattre le siège simultanément au pliage du véhicule.
La longueur des bras articulés (3, 4) ainsi que l'emplacement des pivots respectifs (5, 6, 7, 8) déterminent le fait qu'en fin de pliage les bras articulés (3, 4) se positionnent parallèlement à la colonne de direction (26).

Selon l'emplacement du pivot (9) le support de siège (25) se rabat de l'avant vers l'arrière ou inversement.

Le bras coudé (3) articulé peut être muni d'une butée (15) qui, en fin de course d'ouverture, vient en contact avec le levier d'amortisseur (16).

L'amortisseur de chocs (19) peut être relié au levier de butée (16) par le pivot (17) et au corps principal (1) par le pivot (18) et agir comme élément de suspension unique entre la roue arrière et la roue avant (10).

Le corps principal (1) peut être équipé de chaque côté d'un support (20) et d'une plate-forme (22) auxquels sont fixées des roulettes (21).

Les supports (20) et les plates-formes (22) peuvent être fixés au corps (1) de telle sorte que les roulettes (21) soient décollées du sol en position dépliée du véhicule et en contact avec le sol en position pliée du véhicule.

En fin de course de pliage, un crochet (29) peut se verrouiller sur l'axe (27) en pivotant sur l'axe (28).

Le corps principal (1) peut être traversé par un axe (31) sur lequel s'articule de chaque côté un levier (32) portant une roue (11) d'une part et à l'autre extrémité une rotule (33) qui agit par l'intermédiaire de la bielle (37) sur la rotule (34) fixée sur un levier de basculement (35) lui-même rappelé en position horizontale par un système de traction (38). Dans ce cas, le levier de basculement (35) peut être doté d'un moyen de rappel élastique dans une position préférentielle, par exemple un ressort de traction (38), et le levier de basculement (35) être monté sur une potence (39) articulée sur un axe (40) aménagé sur le bras (32) supportant la roue (11).

Dans ce mode d'exécution la potence (39) peut être reliée au corps principal (1) à travers un élément élastique (42) et le rapport de la distance (y) des axes (40 et 41) et la distance (x) entre l'axe (41) et l'axe d'appui des bielles (37) déterminer la répartition des charges d'appui au sol de chacune des roues.

## Revendications

1. Véhicule constitué d'au moins un corps principal (1) relié à un corps secondaire (2) portant une colonne de direction (26) par l'intermédiaire d'un bras coudé (3) articulé et d'un bras rectiligne (4) articulé, d'un support de siège basculant (25), d'une roue avant (10) montée en rotation à ladite colonne de direction (26) et d'une roue arrière (11) montée en rotation au dit corps principal (1), le pliage de l'articulation formée par le dit corps principal (1), le dit corps secondaire (2), ledit bras coudé (3) et le dit bras rectiligne (4) opérant le passage d'une conformation dudit véhicule à empattement maximum à une conformation à empattement minimum, **caractérisé en ce que** le support de siège basculant (25) est relié au bras coudé (3) à travers une bielle (14).

2. Véhicule selon la revendication 1 **caractérisé par le fait que** la longueur des bras articulés (3, 4) ainsi que l'emplacement des pivots respectifs (5, 6, 7, 8) déterminent **le fait qu'**en fin de pliage les bras articulés (3, 4) se positionnent parallèlement à la colonne de direction (26).

3. Véhicule selon les revendications 1 et 2 **caractérisé par le fait que** selon l'emplacement de son pivot (9), le support de siège (25) se rabat de l'avant vers l'arrière ou inversement.

4. Véhicule selon les revendications 1 et 2 **caractérisé par le fait que** le bras coudé (3) articulé est muni d'une butée (15) qui, en fin de course d'ouverture, vient en contact avec un levier d'amortisseur (16).

5. Véhicule selon la revendication 4 **caractérisé par le fait qu'**un amortisseur de chocs (19) relié au levier d'amortisseur (16) par un pivot (17) et au corps principal (1) par un pivot (18) agit comme élément de suspension unique entre la roue arrière (11) et la roue avant (10).

6. Véhicule selon les revendications 1 et 2 **caractérisé par le fait que** le corps principal (1) est équipé de chaque côté d'un support (20) et d'une plate-forme (22) auxquels sont fixées des roulettes (21).

7. Véhicule selon la revendication 6 **caractérisé par le fait que** les supports (20) et les plates-formes (22) sont fixés au corps principal (1) de telle sorte que les roulettes (21) soient décollées du sol en position dépliée du véhicule et en contact avec le sol en position pliée du véhicule.

8. Véhicule selon les revendications 1 et 2 **caractérisé par le fait que**, en fin de course de pliage, un crochet (29) se verrouille sur un axe (27) en pivotant sur un axe (28).

9. Véhicule selon les revendications 1 et 2 **caractérisé par le fait que** le corps principal (1) est traversé par un axe (31) sur lequel s'articule de chaque côté un levier (32) portant une roue arrière (11) d'une part et à l'autre extrémité une rotule (33) qui agit par l'intermédiaire d'une bielle (37) sur une rotule (34) fixée sur un levier de basculement (35) lui-même rappelé en position horizontale par un système de traction (38).

10. Véhicule selon la revendication 9 **caractérisé par le fait que** le levier de basculement (35) est doté d'un moyen de rappel élastique dans une position préférentielle, par exemple un ressort de traction (38).

11. Véhicule selon la revendication 10 **caractérisé par le fait que** le levier de basculement (35) est monté sur une potence (39) articulée sur un axe (40) aménagé sur le bras (32) supportant la roue arrière (11).

12. Véhicule selon la revendication 11 **caractérisé par le fait que** la potence (39) est reliée au corps principal (1) à travers un élément élastique (42).

13. Véhicule selon la revendication 12 **caractérisé par le fait que** le rapport de la distance y, entre l'axe (40) aménagé sur le bras (32) supportant la roue arrière (11) et l'axe (41) entre la potence (39) et l'élément élastique (42), et la distance x, entre l'axe (41) entre la potence (39) et l'élément élastique (42) et l'axe d'appui des bielles (37), détermine la répartition des charges d'appui au sol de chacune des roues.

## Patentansprüche

1. Fahrzeug, gebildet aus mindestens einem Hauptkörper (1), der mit einem sekundären Körper (2), der die Lenksäule (26) trägt, mittels eines angelenkten gekrümmten Arms (3) und eines angelenkten geraden Arms (4) verbunden ist, einer klappbaren Sitzstütze (25), einem Vorderrad (10), das rotieren an der Lenksäule (26) montiert ist, und einem Hinterrad (11), das rotierend am Hauptkörper (1) montiert ist, wobei das Falten des Gelenks, das von dem Hauptkörper (1), dem sekundären Körper (2), dem gekrümmten Arm (3) und dem geraden Arm (4) gebildet ist, den Übergang aus einer Konformation des Fahrzeugs mit maximalem Radstand in eine Konformation mit minimalem Radstand bewirkt, **dadurch gekennzeichnet, dass** die klappbare Sitzstütze (25) mit dem gekrümmten Arm (3) anhand einer Pleuelstange (14) verbunden ist.

2. Fahrzeug nach Anspruch 1, **dadurch gekennzeichnet, dass** die Länge der angelenkten Arme (3, 4) sowie die Platzierung der jeweiligen Drehzapfen (5, 6, 7, 8) den Fakt bestimmen, dass sich die angelenkten Arme (3, 4) am Ende des Faltens parallel zur Lenksäule (26) positionieren.

3. Fahrzeug nach den Ansprüchen 1 und 2, **dadurch gekennzeichnet, dass** sich die Sitzstütze (25) gemäß Platzierung ihres Drehzapfens (9) von vorn nach hinten oder umgekehrt klappt.

4. Fahrzeug nach den Ansprüchen 1 und 2, **dadurch gekennzeichnet, dass** der angelenkte gekrümmte Arm (3) mit einem Anschlag (15) ausgestattet ist, der am Ende des Öffnungslaufs mit einem Dämpfungshebel (16) in Kontakt kommt.

5. Fahrzeug nach Anspruch 4, **dadurch gekennzeichnet, dass** ein Stoßdämpfer (19), der mit dem Dämpfungshebel (16) mittels eines Drehzapfens (17) und mit dem Hauptkörper (1) mittels eines Drehzapfens (18) verbunden ist, als einziges Aufhängungselement zwischen dem Hinterrad (11) und dem Vorderrad (10) wirkt.

6. Fahrzeug nach den Ansprüchen 1 und 2, **dadurch gekennzeichnet, dass** der Hauptkörper (1) an jeder Seite mit einer Stütze (20) und einer Plattform (22) ausgestattet ist, an denen Räder (21) befestigt sind.

7. Fahrzeug nach Anspruch 6, **dadurch gekennzeichnet, dass** die Stützen (20) und die Plattformen (22) am Hauptkörper (1) derart befestigt sind, dass die Räder (21) in entfalteter Position des Fahrzeugs vom Boden gelöst sind und in gefalteter Position des Fahrzeugs mit dem Boden im Kontakt sind.

8. Fahrzeug nach den Ansprüchen 1 und 2, **dadurch gekennzeichnet, dass** sich am Ende des Faltvorgangs ein Haken (29) auf einer Achse (27) durch Schwenken auf eine Achse (28) verriegelt.

9. Fahrzeug nach den Ansprüchen 1 und 2, **dadurch gekennzeichnet, dass** der Hauptkörper (1) von einer Achse (31) durchquert ist, auf der auf jeder Seite ein Hebel (32) angelenkt ist, der zum einen ein Hinterrade (11) und am anderen Ende ein Kugelgelenk (33) trägt, das mittels einer Pleuelstange (37) auf ein Kugelgelenk (34) wirkt, das auf einem Kipphebel (35) befestigt ist, der selbst von einem Zugsystem (38) in horizontale Position zurückgeholt wird.

10. Fahrzeug nach Anspruch 9, **dadurch gekennzeichnet, dass** der Kipphebel (35) mit einem elastischen Rückholmittel in eine bevorzugte Position, beispielsweise mit einer Zugfeder (38), ausgestattet ist.

11. Fahrzeug nach Anspruch 10, **dadurch gekennzeichnet, dass** der Kipphebel (35) auf einem Galgen (39) montiert ist, der auf einer Achse (40) angelenkt ist, die auf dem Arm (32) ausgebildet ist, welcher das Hinterrad (11) stützt.

12. Fahrzeug nach Anspruch 11, **dadurch gekennzeichnet, dass** der Galgen (39) mit dem Hauptkörper (1) mittels eines elastischen Elements (42) verbunden ist.

13. Fahrzeug nach Anspruch 12, **dadurch gekennzeichnet, dass** das Verhältnis des Abstands y zwischen der Achse (40), die auf dem Arm (32) ausgebildet ist, welcher das Hinterrad (11) stützt, und der Achse (41) zwischen dem Galgen (39) und dem elastischen Element (42) und des Abstands x zwischen der Achse (41) zwischen dem Galgen (39) und dem elastischen Element (42) und der Stützachse der Pleuelstangen (37) die Verteilung der Stützlasten auf dem Boden jedes der Räder bestimmt.

## Claims

1. A vehicle consisting of a main body (1) connected to a secondary body (2) bearing a steering column (26) via a jointed bent arm (3) and a jointed rectilinear arm (4), a pivoting seat support (25), a front wheel (10) rotatably mounted to said steering column (26) and a rear wheel (11) rotatably mounted to said main body (1), the folding of the joint formed by said main body (1), said secondary body (2), said bent arm (3) and said rectilinear arm (4) operating the passing from a conformation of said vehicle with a maximum wheelbase to a conformation with minimum wheelbase, **characterized in that** the pivoting seat support (25) is connected to the bent arm (3) through a connecting rod (14).

2. The vehicle according to claim 1, **characterized by** the fact that the length of the jointed arms (3, 4) as well as the location of the respective pivots (5, 6, 7, 8) determine the fact that at the end of the folding, the jointed arms (3, 4) are positioned parallel to the steering column (26).

3. The vehicle according to claims 1 and 2, **characterized by** the fact that according to the location of its pivot (9), the seat support (25) is folded back from the front to the rear or vice versa.

4. The vehicle according to claims 1 and 2, **characterized by** the fact that the jointed bent arm (3) is provided with an abutment (15) which, at the end of the opening travel, will come into contact with a damper lever (16).

5. The vehicle according to claim 4, **characterized by** the fact that a shock absorber (19) connected to the damper lever (16) through a pivot (17) and to the main body (1) through a pivot (18) acts as a single suspension element between the rear wheel (11) and the front wheel (10).

6. The vehicle according to claims 1 and 2, **characterized by** the fact that the main body (1) is equipped on each side with a support (20) and a platform (22) to which are attached castors (21).

7. The vehicle according to claim 6, **characterized by** the fact that the supports (20) and the platforms (22) are attached to the main body (1) so that the castors (21) are detached from the ground in the unfolded position of the vehicle and in contact with the ground in the folded position of the vehicle.

8. The vehicle according to claims 1 and 2, **characterized by** the fact that, at the end of the folding travel, a hook (29) locks on an axis (27) by pivoting on an axis (28).

9. The vehicle according to claims 1 and 2, **characterized by** the fact that the main body (1) is crossed by an axis (31) on which is jointed on each side a lever (32) bearing a rear wheel (11) on the one hand and at the other end a ball-joint (33) which acts via a connecting rod (37) on a ball-joint (34) attached on a pivoting lever (35) itself returned to a horizontal position by a traction system (38).

10. The vehicle according to claim 9, **characterized by** the fact that the pivoting lever (35) is provided with an elastic return means into a preferential position, for example a traction spring (38).

11. The vehicle according to claim 10, **characterized by** the fact that the pivoting lever (35) is mounted on a pole (39) jointed on an axis (40) arranged on the arm (32) supporting the rear wheel (11).

12. The vehicle according to claim 11, **characterized by** the fact that the pole (39) is connected to the main body (1) through an elastic element (42).

13. The vehicle according to claim 12, **characterized by** the fact that the ratio of the distance y, between the axis (40) made on the arm (32) supporting the rear wheel (11) and the axis (41) between the pole (39) and the elastic element (42), and the distance x, between the axis (41) between the pole (39) and the elastic element (42) and the supporting axis of the connecting rods (37) determines the distribution of the supporting loads on the ground of each of the wheels.
